(19) Europäisches Patentamt
European Patent Office
Office européen des brevets

(11) **EP 3 774 691 B1**

(12) **EUROPÄISCHE PATENTSCHRIFT**

(45) Veröffentlichungstag und Bekanntmachung des Hinweises auf die Patenterteilung:
**15.11.2023   Patentblatt 2023/46**

(21) Anmeldenummer: **19715032.9**

(22) Anmeldetag: **27.03.2019**

(51) Internationale Patentklassifikation (IPC):
$C04B\ 37/00^{(2006.01)}$    $B32B\ 9/00^{(2006.01)}$
$E04F\ 13/14^{(2006.01)}$    $E04C\ 2/288^{(2006.01)}$
$A47B\ 96/18^{(2006.01)}$    $A47B\ 96/00^{(2006.01)}$
$B32B\ 3/02^{(2006.01)}$    $B32B\ 3/08^{(2006.01)}$
$B32B\ 3/26^{(2006.01)}$    $B32B\ 3/30^{(2006.01)}$
$B32B\ 3/12^{(2006.01)}$    $B32B\ 15/16^{(2006.01)}$

(52) Gemeinsame Patentklassifikation (CPC):
C04B 37/008; A47B 96/18; A47B 96/206;
B32B 3/02; B32B 3/08; B32B 3/26; B32B 3/30;
B32B 5/026; B32B 5/16; B32B 5/30; B32B 7/12;
B32B 9/002; B32B 9/005; B32B 9/048;
B32B 15/16;                              (Forts.)

(86) Internationale Anmeldenummer:
**PCT/EP2019/057715**

(87) Internationale Veröffentlichungsnummer:
**WO 2019/185711 (03.10.2019 Gazette 2019/40)**

(54) **PLATTENKÖRPER**

PANEL ELEMENT

CORPS EN PLAQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2018   DE 102018107675
24.07.2018   DE 102018117887
05.12.2018   DE 102018130943
21.03.2019   DE 102019107290**

(43) Veröffentlichungstag der Anmeldung:
**17.02.2021   Patentblatt 2021/07**

(73) Patentinhaber: **nobilia-Werke J. Stickling GmbH & Co. KG
33415 Verl (DE)**

(72) Erfinder:
• **STEMPEL, Sascha
91054 Erlangen (DE)**
• **DEGENHARDT, Florian
33803 Steinhagen (DE)**
• **KATTWINKEL, Frieder
42653 Solingen (DE)**
• **PANTWICH, Andy
33104 Paderborn (DE)**
• **WIESING, Tobias
33129 Delbrück (DE)**

(74) Vertreter: **Müller, Enno et al
Rieder & Partner mbB
Patentanwälte - Rechtsanwalt
Yale-Allee 26
42329 Wuppertal (DE)**

(56) Entgegenhaltungen:
**EP-A1- 1 153 738**

EP 3 774 691 B1

(52) Gemeinsame Patentklassifikation (CPC): (Forts.)
**B32B 15/20; B32B 19/02; B32B 19/04;
B32B 19/041; B32B 19/042; B32B 19/045;
B32B 19/06; B32B 21/12; B32B 27/14;
E04C 2/288;** B32B 2260/021; B32B 2260/046;
B32B 2262/101; B32B 2264/10; B32B 2264/101;
B32B 2264/12; B32B 2307/538; B32B 2307/706;
B32B 2307/732; B32B 2419/00; B32B 2607/00;
E04F 13/144

**Beschreibung**

**Gebiet der Technik**

Die Erfindung betrifft zunächst einen Plattenkörper mit einem mehrlagigen Aufbau nach den Merkmalen des Oberbegriffes des Anspruches 1.
Die Erfindung betrifft weiter ein Verfahren zur Herstellung eines Plattenkörpers mit einem mehrlagigen Aufbau, nach den Merkmalen des Oberbegriffes des Anspruches 13.

**Stand der Technik**

Derartige Plattenkörper und deren Herstellung sind bereits in verschiedener Hinsicht bekannt geworden. Unter anderem, wie auch im Rahmen der Anmeldung bevorzugt, gegebenenfalls bei entsprechender weitergehender Anpassung, als Arbeitsplatten für Küchen. In diesem Fall bildet die erste Lage eine obere Lage, welche die Arbeitsfläche darstellt. Solche Arbeitsplatten sind auch bereits aus einem die obere Außenfläche bildenden Naturstein bekannt geworden.
Bei einer bekannten Arbeitsplatte, bei welcher die eine Außenfläche bildende obere Lage aus Naturstein besteht, ist die Verbindung zu der weiteren, aus Blähglasgranulat bestehenden Lage mittels einer Tragmaterialschicht aus Karbonfaserlaminat erreicht, wobei die Karbonfasern mit Harz gemischt vorliegen.
Im Weiteren ist zum Stand der Technik auf die DE 195 19 116 A1 zu verweisen. Bei der hieraus bekannten Naturstein-Leichtbauplatte ist auf eine Leichtträgerplatte eine Klebefolie aufgebracht und die Natursteinplatte unter Vermittlung dieser Klebefolie bei Temperatur und Druck mit der Leichtträgerplatte verbunden.
Aus der DE 10 2011 108 996 B3 ist eine zweischichtige Verbundplatte bekannt, bei welcher eine Natursteinplatte mit einem Gemenge aus gebrochenem und zerriebenem Stein mittels eines Klebemittels verbunden ist. Als Klebemittel wird ein Epoxidharz verwendet, das im Zuge der Aushärtung einer Schrumpfung unterliegt. Aus der DE 10 2010 034 851 B4 ist ein Verfahren zum Herstellen einer Verbundplatte bekannt, wobei ein Gemenge aus gebrochenem und zerriebenem Gestein auf eine mit Klebemittel versehene Fläche der Natursteinplatte eingestreut wird und nach Aushärtung des ersten Klebemittels ein zweites Klebemittel auf das Gesteinsmaterial aufgebracht wird. Als erstes und zweites Klebemittel wird ein Epoxidharz verwendet, das im Zuge der Aushärtung einer Schrumpfung unterliegt. Weiter ist auf die DE 10 2010 003 236 U1 zu verweisen, woraus es bekannt ist, zwischen einer Tragschicht aus einer Schaumglasgranulatmischung mit Epoxidharz als Bindemittel eine Mineralgussschicht auszubilden aus Quarzsand, Quarzmehl und Epoxidharz als Bindemittel, unter stoffschlüssiger Verbindung mit der Tragschicht.
Aus der EP 1153738 A1 ist ein Plattenkörper und dessen Herstellung bekannt, der aus einer Natursteinplatte und einer darunter befindlichen Stabilisierungsschicht, unter der wiederum eine Granulatschicht aus Schaumglasgranulat oder Blähtongranulat angeordnet ist und schließlich eine weitere Stabilisierungsschicht, besteht. Die Granulatschicht wird zunächst in einen Zwischenraum zwischen dem Naturstein und der äußeren Stabilisierungsschicht eingeschüttet und danach erfolgt eine Ausschäumung mit einem Hartschaum.
Die bekannten Plattenkörper sind in der Herstellung vergleichsweise aufwendig oder erweisen sich im Hinblick auf die Anforderungen, die an einen solchen Plattenkörper gestellt werden, nicht durchweg als zuverlässig. Eine Klebefolie ist mit besonderem Aufwand zu handhaben und kann sich in der Praxis unter Umständen auch nicht in jeder Hinsicht den Anforderungen, die an einen grundsätzlich weltweit einsetzbaren Plattenkörper zu stellen sind, gerecht werdend erweisen. Die Verhaftung zwischen den bekannten Lagen ist nicht immer zufriedenstellend. Die Ausschäumung mit einem Hartschaum nach Einfüllen der Granulatlage erfordert relativ große Zwischenräume zwischen den Granulatkörpern, sodass sich Stabilitätsprobleme ergeben können.
Im Hinblick auf die Anforderungen, die an einen derartigen Plattenkörper gestellt werden, sind die Anforderungen bis zum Einbau des Plattenkörpers oftmals wesentlicher als die Anforderungen, die im tatsächlichen Einbauzustand zu erfüllen sind. Insbesondere sind dies Anforderungen, die auf dem Transport oder bei der Lagerung, etwa hinsichtlich Biegemomenten, Erschütterungen und Temperaturbeanspruchung, auftreten können. Allen diesen Anforderungen muss der Plattenkörper, natürlich auch den im täglichen Gebrauch nach dem Einbau auftretenden Anforderungen hinsichtlich Witterungsfestigkeit, Schnittfestigkeit und/oder Reinigbarkeit etc., gerecht werden. Zugleich soll der Plattenkörper aber auch ein möglichst geringes Gewicht aufweisen. Darüber hinaus soll der Plattenkörper gut verarbeitbar sein, wozu insbesondere auch eine Schraubbarkeit und/oder Zuschneidbarkeit (insbesondere durch Sägen) gefordert wird. Nicht zuletzt soll er zu einem wettbewerbsfähigen Preis herstellbar sein.
Hinsichtlich einer Außenfläche aus einem sonstigen steinartigen Werkstoff kann es sich beispielsweise um einen Werkstoff handeln, der aus einem Kunststoff-/Granulatgemisch besteht. Letztlich ist mit einem sonstigen steinartigen Werkstoff jeder Werkstoff angesprochen, der einem Nutzer eine Oberfläche mit einer steinartigen Qualität bietet.

## Zusammenfassung der Erfindung

Ausgehend von dem dargelegten Stand der Technik beschäftigt sich die Erfindung mit der Aufgabenstellung, einen Plattenkörper anzugeben, der bei günstiger industrieller Herstellbarkeit bestmöglich den Praxisanforderungen an einen derartigen Plattenkörper genügt, insbesondere zur letztlichen Verwendung als Arbeitsplatte in einer Küche. Darüber hinaus beschäftigt sich die Erfindung auch mit der Aufgabenstellung, ein diesbezügliches Herstellungsverfahren anzugeben.

Diese Aufgabe ist hinsichtlich des Plattenkörpers beim Gegenstand des Anspruches 1 gelöst, wobei darauf abgestellt ist, dass das Granulat zu 50% oder mehr in geschlossener Kugelform vorliegt, mit einer Mehrzahl von gemischt vorliegenden Durchmesserfraktionen.

Ein sich im Volumen vergrößernde Klebstoff ist vorteilhaft im Hinblick auf die erstrebte feste Verbindung zwischen der ersten und der zweiten Lage. Man kann auch von einem sich verkrallenden Klebstoff sprechen. Es handelt sich bevorzugt um einen Einkomponentenklebstoff. Hierbei kann eine geeignet hohe Einstellung der Viskosität diese Verkrallungseigenschaft unterstützen. Andererseits, wobei es auf die Einstellung der Viskosität nicht vorrangig ankommt, kann es sich auch um einen Zweikomponentenklebstoff handeln. Das sich vergrößernde Volumen kann unabhängig von einem Ein- oder Zweikomponentenklebstoff dadurch erreicht sein, dass der Klebstoff ein schäumender Klebstoff ist.

Derartige Plattenkörper sind insbesondere als Halbzeug zu betrachten, zur weiteren Verarbeitung und Herstellung von beispielsweise Arbeitsplatten, wie sie vornehmlich in Küchen üblich sind. Darüber hinaus kann es sich aber auch beispielsweise um eine Fassadenplatte, eine Innenausbauplatte, eine Fensterbank, eine Tür, wobei sowohl Außen- wie auch Innentüren bezüglich eines Gebäudes in Frage kommen, oder dergleichen handeln, zu welchen ein solches Halbzeug letztlich verarbeitet wird. Hierbei kann es sich in weiterer Einzelheit beispielsweise auch um ein Plattenteil in einem Badezimmer oder einem Nassenzellenbereich allgemein handeln. Hinsichtlich der industriellen Herstellbarkeit ist wesentlich, dass die Plattenkörper als Großbauteile mit größtmöglichen Abmessungen, beispielsweise als Rechteckkörper mit einer Breite von 1,3 m bis 2,1 m oder mehr und einer Länge von 2,5 m bis 4 m oder länger hergestellt werden. Eine derzeit bevorzugte größte Länge liegt bei 3,65 m. Zu der industriellen Herstellung gehört auch, dass die jeweiligen Lagen vollflächig und im jeweiligen Volumen praktisch homogen durchgehend gebildet sind. Somit dienen sie als Ausgangs-Plattenkörper auch für Anwendungen, bei welchen gewisse Bereiche einer Lage nicht notwendig vollflächig vorhanden sein müssen aber aufgrund des Einsatzes dieser Plattenkörper dann vollflächig gegeben sind.

Hinsichtlich jedenfalls einer Arbeitsplatte für Küchen ist ausgehend von dem Halbzeug ein Zuschneiden erforderlich und in der Regel eine Kantenverleimung. Zuvor wird bevorzugt, insbesondere im Falle von Naturstein, noch eine Oberflächenbehandlung jedenfalls der Sichtseite vorgenommen. Beispielsweise durch Schleifen und/oder Polieren. Darüber hinaus kann zur Fertigstellung eines Küchenmöbels mit einer solchen Arbeitsplatte eine Schraub- und/oder Klebeverbindung mit einem Untermöbel vorgenommen werden.

Die Kantenverleimung kann mit einer Steinkante oder einer Kante aus einem sonstigen Werkstoff vorgenommen werden. Insbesondere ist aber auch die Verleimung mit einer Kunststoffkante, hierbei bevorzugt einer aus PP bestehenden Kunststoffkante, möglich und derzeit bevorzugt.

Bei einer Anwendung beispielsweise als Tür empfiehlt es sich, auch die genannte Oberflächenbehandlung vorzunehmen. Geeigneterweise, wenn auch nicht zwingend, wird die Oberflächenbehandlung dann auf beiden gegenüberliegenden Außenseiten, die jeweils eine Sichtseite sind, vorgenommen.

Die Verbindung der ersten Lage mit der zweiten Lage unmittelbar durch einen sich im Zuge einer Aushärtung im Volumen vergrößernden Klebstoff erbringt für sich eine gewünschte nur einen geringen Raum einnehmende und zuverlässige Verbindung zwischen der ersten und der zweiten Lage. Einer abgesehen von dem Klebstoff gesonderten Lage bedarf es zwar grundsätzlich nicht, es kann jedoch gleichwohl vorgesehen sein, dass eine zusätzliche Lage, insbesondere eine Gewebelage, insbesondere anhaftend an der ersten Lage, vorgesehen ist. Aufgrund der insbesondere dreidimensionalen Struktur der Oberfläche der zweiten Lage kann trotz des Klebstoffs, und gegebenenfalls auch der weiteren Lage, ein unmittelbares Anliegen - oder begrenzt flächenweises Aufeinanderliegen - zwischen der ersten und der zweiten Lage gegeben sein. Die erste Lage kann sich aufgrund der dreidimensionalen Struktur punktartig oder fleckenartig begrenzt an vielen Stellen unmittelbar auf der zweiten Lage abstützen. Gleiches gilt natürlich auch im Falle, dass noch die genannte zusätzliche Lage, insbesondere Gewebelage, auf Seiten der ersten Lage, vorgesehen ist. Der Klebstoff kann auch selbst amorph, etwa als flüssiger Klebstoff, aufgetragen werden. Dem Klebstoff ist eine günstige freie Ausdehnbarkeit gegeben, welche eine enge Umfassung der dreidimensionalen Oberflächenstruktur der zweiten Lage, und hierdurch gleichsam eine Verklammerung, oder jedenfalls eine Ausfüllung der bei einer lediglichen Anlage an die Unterseite der ersten Lage gegebenen Räume, ermöglicht.

Das Bindemittel der zweiten Lage kann mit dem Klebstoff zwischen der ersten und zweiten Lage übereinstimmend, als sich im Volumen vergrößernder Klebstoff, insbesondere ein PU-Klebstoff, gewählt sein. Hierbei kann gegebenenfalls, wenn die Aufbringung der zweiten Lage auf die erste Lage "nass", also bei noch flüssigem Klebstoff, erfolgt, auf eine gesonderte Klebstofflage zwischen der ersten und der zweiten Lage verzichtet werden, diese bildet sich dann vielmehr im Zuge einer Aushärtung, wie nachstehend noch weiter erläutert bevorzugt unter Druck, und damit einhergehender Volumenvergrößerung des hier auch das Bindemittel der zweiten Lage bildenden Klebstoffs.

Gemäß bevorzugter Ausführungsform wird die zweite Lage als zunächst gesondert gefertigter Plattenkörper bereitgestellt, auch in der möglichen Variante mit dem sich im Volumen vergrößernden Klebstoff als Bindemittel, und sodann die gesonderte Klebstofflage zwischen der ersten und zweiten Lage noch aufgebracht.

Hinsichtlich eines Herstellungsverfahrens für einen derartigen Plattenkörper ist die Aufgabe beim Gegenstand des Anspruches 13 gelöst, wobei darauf abgestellt ist, dass auf eine Rückseite der ersten Lage ein bevorzugt im Zuge einer Aushärtung sich im Volumen vergrößernder Klebstoff aufgebracht wird, dass sodann die Granulatlage, aufgebracht wird, die ein Bindemittel aufweist, das auch durch den Klebstoff gegeben sein kann oder unterschiedlich ist zu dem Klebstoff, wobei die Granulatlage bei einer Verarbeitung schon als für sich handhabbare Platte, mit einer Bindemittelmatrix, vorliegt oder im Zuge einer Schichtbildung, durch Aufstreuen oder Aufgießen von mit Bindemittel durchsetzten Granulatkörpern gebildet wird und Granulat aufweist, das zu 50% oder mehr in geschlossener Kugelform vorliegt, wobei weiter das Granulat in einer Mehrzahl von gemischten Durchmesserfraktionen vorliegt.

Diese Herstellungsweise erbringt die schon beschriebene günstige enge Umfassung einer dreidimensionalen Oberflächenstruktur jedenfalls der zweiten Lage.

Die Oberflächenstruktur der zweiten Lage ist bevorzugt deutlich unebener als die zugeordnete, also eine Unterseite der ersten Lage bildende, Oberflächenstruktur der ersten Lage und gegebenenfalls im Vergleich zu der zugewandten Oberfläche der ersten Lage zerklüftet. Das Maß einer Oberflächenrauigkeit der Oberflächenstruktur der zweiten Lage, auch Rauheitswert genannt, liegt bevorzugt oberhalb von RZ 25 (gemittelte Rautiefe in $\mu$m), die etwa durch das Tastschnittverfahren ermittelt werden kann. Die Unterseite der ersten Lage kann aber auch eine deutliche Unebenheit aufweisen, hierbei bis hin zu einer gleichen oder sogar größeren Unebenheit als die zugewandte Oberfläche der zweiten Lage.

Hinsichtlich eines fertiggestellten Plattenkörpers, gegebenenfalls in der Anwendung einer Arbeitsplatte, kann die genannte Rauigkeit auch dadurch ermittelt werden, dass ein Trennschnitt senkrecht zu einer Flächenerstreckung des Plattenkörpers vorgenommen wird und die am Übergang der Klebstofflage zu der zweiten Lage sich ergebende Linienstruktur aufgezeichnet wird und die Abweichungen gegenüber einer darin sich ergebenden Mittelebene, die sich parallel zu der genannten Flächenerstreckung erstreckend vorzugeben ist, als Abweichmaße im Hinblick auf die genannte Rautiefe ermittelt werden. In absoluten Zahlen ist es jedenfalls bevorzugt, dass sich Abweichungen von der Mittelebene im Bereich von $^{1}/_{10}$ mm oder mehr bis hin zu 1 mm oder auch darüber hinaus ergeben.

Hinsichtlich einer Gesamtdicke eines solchen Plattenkörpers ist bevorzugt, dass diese im Bereich von 10 mm bis 50 mm gegeben ist. Hierbei kann die erste Lage eine Dickenabmessung von 1 mm bis 10 mm, bevorzugt im Bereich von 2 mm bis 6 mm, aufweisen und die dritte Lage, wie nachstehend noch weiter erläutert, bevorzugt vergleichsweise dünn, im Bereich von 1 mm, gebildet sein. Entsprechend ergibt sich das Differenzmaß für die zweite Lage. Dies insbesondere auch im Hinblick auf ein übliches Dickenmaß für eine Arbeitsplatte in einer Küche, die bei 38 mm liegt. Es sind aber eben auch hiervon abweichende Dicken durchaus sinnvoll einsetzbar.

Ein Plattenkörper, und gegebenenfalls eine hierauf beruhende Arbeitsplatte, mit einem oder mehreren der Merkmale wie vor- und nachstehend erläutert, ist insbesondere auch günstig mit einem weiteren Teil, wie beispielsweise einem Untermöbel, schraubverbindbar. Die Verschraubung kann insbesondere von unten, durch die dritte Lage, in die zweite Lage hinein vorgenommen werden.

Die zweite Lage, die aus dem mineralischen Granulat besteht, ist auf Basis von kugelartigem mineralischem Granulat gebildet. Hierbei ist ein wesentlicher Anteil, ca. 50% oder mehr des Granulats, kugelartiges Granulat. Dieses kugelartige Granulat liegt in geschlossener oder im Wesentlichen geschlossener Form vor. Weiter ist bevorzugt, dass eine Mischung verschieden großer Granulatkörper, also auch eventuell eine Mischung von kugelartigen und nicht kugelartigen Granulatkörpern, vorliegt. Hinsichtlich der bevorzugten Kugelform kann dies eine Bandbreite von ca. 0,1 mm bis ca. 4,0 mm Durchmesser betreffen. Hierbei sind bevorzugt drei bis sechs, weiter bevorzugt vier oder fünf, unterschiedliche Fraktionen gebildet, die entsprechend im Mittel 4 mm, 3 mm, 2 mm, 1 mm und 0,1 mm Durchmesser aufweisen, wobei auch Zwischengrößen wie 2,5 mm oder 3,5 mm vorgesehen sein können. Man kann andererseits die Fraktionen auch dahingehend beschreiben, dass sie Granulatkörper mit einer Größe von 2,0 mm bis 4,0 mm, von 1,0 mm bis 2 mm, von 0,5 mm bis 1 mm, von 0,2 mm bis 0,5 mm und von 0,1 mm bis 0,3 mm umfassen. Bevorzugt werden derartige Fraktionen in einem solchen Anteil zu dem Granulat vermischt, dass jede Fraktion letztlich in etwa ein gleiches Volumen bezogen auf das erhaltene Granulatgemisch umfasst.

Es kann teilweise sonstiges, nicht kugelartiges Granulat verwendet sein. Dieses nicht kugelartige Granulat weist bevorzugt in einem Grundriss ein Größtmaß ebenfalls in einer Bandbreite von 0,1 mm bis 4 mm auf. Auch hierbei können unterschiedliche, bevorzugt vier bis sechs, weiter bevorzugt fünf unterschiedliche Fraktionen gebildet sein, die entsprechend im Mittel ein Größtmaß von 4 mm, 3 mm, 2 mm, 1 mm und 0,1 mm aufweisen können, wobei auch Zwischengrößen wie 2, 5 mm oder 3 mm im Größtmaß vorgesehen sein können.

Bei dem mineralischen Granulat kann es sich insbesondere um Blähglas-Granulat handeln. Es kann sich aber auch um beispielsweise Blähsand handeln, der auch unter dem Namen Tobermorit bekannt ist.

Die Granulatkörper sind miteinander durch ein hierfür bevorzugt eigen vorgesehenes Bindemittel verbunden. Es kann sich um ein Harz handeln. Es kann sich auch um ein Zweikomponentenharz handeln. Das Zweikomponentenharz kann ein Epoxidharz sein. Das Bindemittel für die Granulatkörper kann im Weiteren ein PU(Polyurethan)-Klebstoff sein. Hierbei ist bevorzugt ein bei Aushärtung nicht expandierender PU-Klebstoff verwendet. Wie angegeben, kann es sich aber alternativ auch bei dem Bindemittel um einen bei Aushärtung sich im Volumen vergrößernden Klebstoff, insbesondere auch einen PU-Klebstoff, handeln.

Die Granulatkörper können bei einer Verarbeitung schon als für sich handhabbare Platte vorliegen, entsprechend mit einer Bindemittelmatrix. Dieser Körper, als Lage des Plattenkörpers, kann aber auch erst im Zuge einer Schichtbildung, durch Aufstreuen oder Aufgießen von mit Bindemittel durchsetzten Granulatkörpern, gebildet werden.

Hierbei, d.h. bei der Herstellung und auch im Hinblick auf den fertig gestellten Granulatkörper, ist auch der Anteil des Bindemittels wesentlich. Hinsichtlich einer Volumenbetrachtung beträgt der Bindemittelanteil, in einer Flüssigphase, bevorzugt zwischen 2% und 15% des Volumens der Granulatkörper insgesamt ohne Bindemittel. Weiter bevorzugt zwischen 10% und 6%. Weiter bevorzugt zwischen 7% und 8%, beispielsweise 7,5% Volumenprozent.

Dadurch, dass bevorzugt der sich im Volumen vergrößernde, und/oder die Eigenschaft des Verkrallens aufweisende Klebstoff unterschiedlich ist von dem Bindemittel in der zweiten Lage, die aus dem mineralischen Granulat besteht, kann günstig auf den Zusammenhalt zwischen den Lagen vermittels dieses sich beim Aushärten im Volumen vergrößernden Klebstoffes abgestellt werden. Dieser Zusammenhalt kann sich aber prinzipiell auch, wie angegeben, bei der Verwendung des gleichen bzw. desselben Klebstoffes als Verbindung zwischen der zweiten und ersten Lage und als Bindemittel der zweiten Lage ergeben.

Dadurch, dass der Klebstoff im Volumen vergrößernd ist, im Zuge einer Aushärtung, kann günstig durch eine Aushärtung unter Druck, d.h. zumindest unter Bewegungshinderung quer zu einer Flächenerstreckung des so gebildeten Plattenkörpers, gegebenenfalls auch durch zusätzliche Druck-Verkleinerung eines Dickenmaßes der Lagen in einem ausgehend von einem Ausgangszustand, erreicht werden, so dass der sich im Volumen vergrößernde Klebstoff gezwungen ist, in Spalte und Oberflächenbereiche der zueinander gewandten Oberflächen der ersten und zweiten Lage, insbesondere also der zweiten Lage, einzudringen und/oder dreidimensionale Strukturen der jeweiligen Oberfläche eng zu umschließen. So lässt sich auch eine auch günstige Verklammerung zusätzlich zu der Klebstoffwirkung an sich erreichen. Dies kann sich bei der Herstellung des Plattenkörpers im Zuge auch einer erst dann einsetzenden Verklebung/Verbindung der mineralischen Granulatkörper vollziehen, wodurch also der sich im Volumen vergrößernde Klebstoff vergleichsweise leicht in den Bereich, zumindest oberflächlich, der zweiten Lage eindringen kann. Im Falle, dass auch das Bindemittel aus dem sich bei Aushärtung im Volumen vergrößernden Klebstoff besteht, kann sich auch eine gegenseitige Durchdringung hierdurch vollziehen.

Soweit die zweite Lage als Schüttung, gegebenenfalls bereits mit dem Bindemittel versehene Schüttung, in eine Form eingebracht wird, ist hinsichtlich einer Druckbeaufschlagung darauf abgestellt, dass sich eine Reduzierung des Gesamtvolumens (Ausgangsvolumen) des Plattenkörpers ergibt, wobei sich die Volumenreduzierung insbesondere auf die zweite Lage, die Granulatlage, bezieht und zwischen 30 % und 50% gegeben ist, bevorzugt im Bereich von 40%. Der hierfür erforderliche Druck ist dann aufzubringen. Diese Volumenreduzierung entspricht zugleich einer gleichen Reduzierung der Dicke, also auch zwischen 30% und 50% bezogen auf eine Ausgangsdicke. Eine Reduzierung des Gesamtvolumens durch die Druckbeaufschlagung ist einerseits vorteilhaft im Hinblick auf eine Stabilität der so verdichteten Schüttung beziehungsweise letztlich des daraus hergestellten Plattenkörpers. Andererseits ergibt sich daraus aber auch eine zunehmend geringere Neigung des Plattenkörpers, Feuchtigkeit, insbesondere Wasser, aufzunehmen. Dies kann im Hinblick auf nachfolgende Arbeitsschritte, insbesondere bei als solchem bereits fertiggestellten Plattenkörper, die gegebenenfalls unter Zusatz von Wasser vorgenommen werden, vorteilhaft sein.

Hinsichtlich der dritten Lage kann eine Gewebelage, beispielsweise eine Lage aus Glasfasergewebe, vorgesehen sein. Diese kann mit einem hier als Binder bezeichneten Klebstoff, beispielsweise einem Harz, versetzt sein. Hinsichtlich der Gewebeausbildung kann auch in einer bevorzugten Ausgestaltung eine Anisotropie gegeben sein, derart dass beispielsweise in Längsrichtung der Arbeitsplatte stärkere Fasern verwendet sind als in Querrichtung.

Insbesondere bei einer Anwendung als Tür ist bevorzugt, dass die dritte Lage in gleicher Weise ausgebildet ist wie die erste Lage, also aus einem eine steinartige Fläche darbietenden Naturstein, einem Keramikwerkstoff, einem Quarz-Komposit oder einem sonstigen steinartigen Werkstoff besteht. Ein solchermaßen hergestellter Plattenkörper ist bevorzugt hinsichtlich einer LängsMittelebene spiegelsymmetrisch aufgebaut. Insbesondere bei der Anwendung als Tür kann der Plattenkörper auch randseitig, zur Ausbildung einer Schmalseite und insbesondere deren Außenfläche, aus einem Massivwerkstoff wie insbesondere Holz, ggf. aber auch Kunststoff, bestehen. Dieser Massivwerkstoff kann in Form einer Leiste in den Plattenkörper eingelassen sein. Bevorzugt kann hierzu herstellungsmäßig ein entsprechender Teilbereich der zweiten Lage herausgenommen, beispielsweise ausgefräst sein und dieses Massivkörperteil dann eingesetzt sein. Es kann beispielsweise auch dann wieder mit der zweiten Lage verklebt sein.

Bevorzugt ist, dass das Massivkörperteil sich nur innerhalb der zweiten Lage befindet bzw. nur Bereiche der zweiten Lage herausgearbeitet, also beispielsweise herausgefräst, sind, um den Raum für das Massivkörperteil zu schaffen. Bevorzugt ist auch, dass das Massivkörperteil unmittelbar an die zweite Lage, oder gegebenenfalls auch die erste Lage beziehungsweise die dritte Lage, weiter gegebenenfalls auch die vierte Lage über eine praktisch volle Querschnittsfläche berührt, so dass praktisch kein Hohlraum zwischen dem Massivkörperteil und der in Frage kommenden Lage gegeben ist.

Die dritte Lage ist bevorzugt auch mittels eines sich im Zuge einer Aushärtung im Volumen vergrößernden Klebstoffs mit der zweiten Lage oder jedenfalls der darüber befindlichen Lage verbunden. Es kann sich um den gleichen PU-Klebstoff handeln, der auch zwischen der ersten und der zweiten Lage zur Verbindung verwendet ist.

Das Glasfasergewebe selbst kann als fertiger Plattenkörper bei der Verarbeitung zu dem hier beschriebenen Plattenkörper bereits vorliegen. Es kann sich um einen vergleichsweise dünnen Glasfasergewebe-Plattenkörper handeln, beispielsweise mit einer Dicke zwischen 0,5 mm und 1,5 mm, weiter bevorzugt zwischen 1,0 mm und 0,6 mm und darüber hinaus bevorzugt zwischen 0,9 mm und 0,7 mm Dicke. Die erste und/oder dritte Lage kann unmittelbar mit der zweiten Lage verbunden sein. Alternativ kann aber auch vorgesehen sein, dass die erste Lage vermittels einer vierten Lage, einer Zwischenlage, mit der zweiten Lage verbunden ist, wobei die vierte Lage mittels des sich im Zuge einer Aushärtung im Volumen vergrößernden Klebstoffs mit der zweiten Lage verbunden ist, wobei der Klebstoff auch in diesem Fall eine dreidimensionale Oberflächenstruktur der zweiten Lage umfassend vorliegt und das Bindemittel der zweiten Lage bildet oder auch unterschiedlich ist zu dem Bindemittel der zweiten Lage.

In diesem Fall, dass eine vierte Lage vorgesehen ist, kann die Verbindung zwischen der ersten Lage und der vierten Lage mittels eines üblichen Klebstoffes, also beispielsweise Epoxidharz-Klebstoff, vorgesehen sein, bevorzugt ist die Verbindung aber auch mittels des genannten sich bei einer Aushärtung im Volumen vergrößernden Klebstoffs verbunden.

Die zweite Lage kann aber auch bevorzugt in Form eines grobmaschigen Gewebes ausgebildet sein, oder jedenfalls in einer Kreuzstruktur, bei welcher freie Zwischenräume (Löcher) verbleiben. In diesem Fall ist trotz der Anordnung der vierten Lage eine unmittelbare Verbindung zwischen der ersten Lage und der zweiten Lage, gleichsam unter Durchgriff durch die vierte Lage, gegeben, auch in diesem Fall mittels des sich im Zuge einer Aushärtung im Volumen vergrößernden Klebstoffs, wie eingangs beschrieben.

Soweit vor- und nachstehend ein sich im Volumen vergrößernder Klebstoff beschrieben ist, ist dieser bevorzugt als schäumender Klebstoff ausgebildet.

## Kurze Beschreibung der Zeichnungen

Nachstehend ist die Erfindung des Weiteren anhand der beigefügten Zeichnung, die jedoch lediglich ein Ausführungsbeispiel darstellt, erläutert. Hierbei zeigt:

Fig. 1    ein schematisch dargestelltes Küchenmöbel mit einer darauf befindlichen Arbeitsplatte;

Fig. 2    einen Ausschnitts-Längsquerschnitt durch die Arbeitsplatte des Küchenmöbels gemäß Fig. 1;

Fig. 2a    eine Nischenauskleidung;

Fig. 3    einen nochmals vergrößerten Ausschnitt aus dem Längsschnitt gemäß Fig. 2 im Bereich III;

Fig. 4a-h    eine schematisch wiedergegebene Abfolge einer ersten Herstellmöglichkeit des Plattenkörpers; wobei

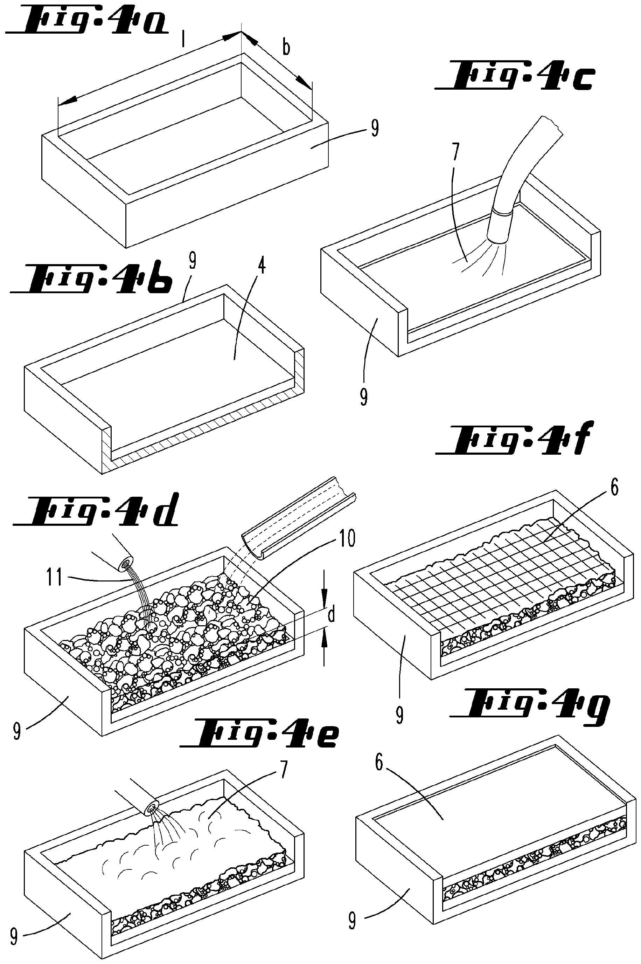

Fig. 4a    eine Form im Ausgangszustand, ungefüllt, zeigt;

Fig. 4b    die Form gemäß Fig. 4a nach Einlage der ersten Lage;

Fig. 4c    die Aufbringung von Klebstoff auf die erste Lage;

Fig. 4d    die Form gemäß Fig. 4a mit der eingelegten ersten Lage und dem weiter eingebrachten Granulat, bei Aufbringung eines Bindemittels für das Granulat;

Fig. 4e    alternativ oder ergänzend die Aufbringung einer weiteren Lage Klebstoff auf die Granulatschicht, gegebenenfalls auch auf die dritte Lage;

Fig. 4f    die Aufbringung der dritten Lage auf das Granulat;

Fig. 4g    bezüglich der Variante bei Ausbildung einer Tür oder dergleichen Aufbringung einer dritten Lage auf die Lage Klebstoff gemäß Figur 4e; und

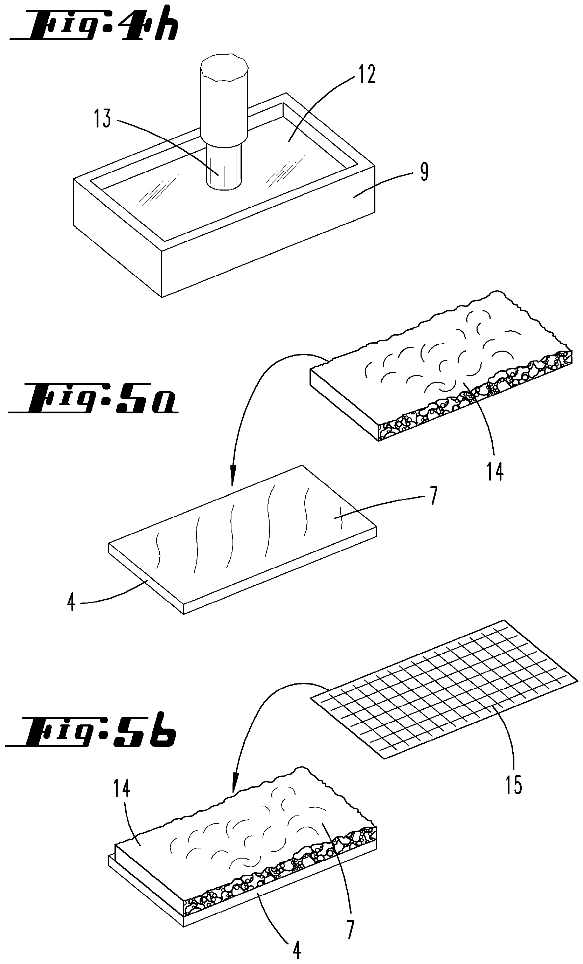

Fig. 4h        die Volumenverringerung einer gefüllten Form im Hinblick auf die Granulatlage, hier mit einer Druckplatte, die mit einem Druckstempel beaufschlagt wird;

Fig. 5a-b      eine Darstellung gemäß Figur 4, einer zweiten möglichen Herstellung des Plattenkörpers; nämlich

Fig. 5a        die erste Lage, die mit Klebstoff versehen ist, wird ein gesondert vorgefertigter Granulat-Plattenkörper aufgelegt; und

Fig. 5b        auf die Zusammenfassung des Granulat-Plattenkörpers und der ersten Lage wird die dritte Lage aufgelegt;

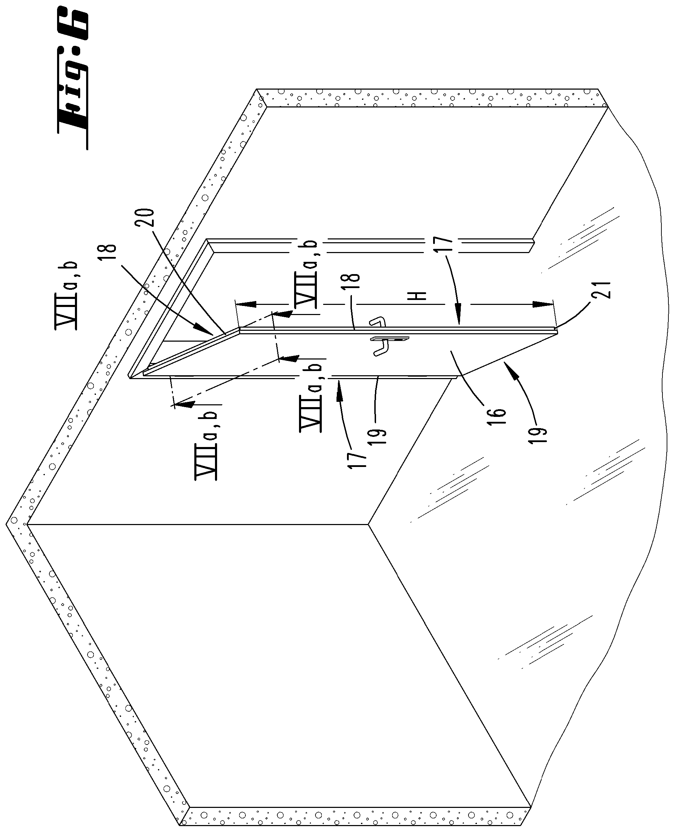

Fig. 6         eine schematische Ansicht einer Tür;

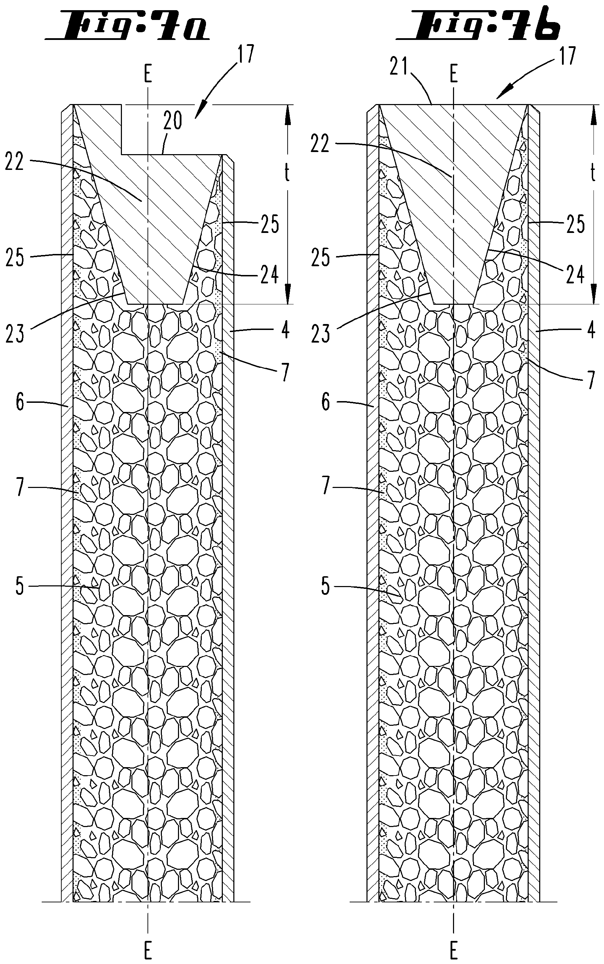

Fig. 7a-b      eine Tür in Schnittansicht, nämlich

Fig. 7a        einen ersten Schnitt durch die Tür gemäß Fig. 6, geschnitten entlang der Linie VIIa-VIIa; und

Fig. 7b        einen zweiten Schnitt durch die Tür gemäß Fig. 6, geschnitten entlang der Linie VIIb-VIIb.

**Beschreibung der Ausführungsformen**

Anhand eines ersten Beispiels einer aus einem Plattenkörper, wie grundsätzlich hier betroffen, hergestellten Arbeitsplatte 2 eines Küchenmöbels 1, und anhand eines zweiten Beispiels betreffend eine Tür 16, ist die Erfindung weiter erläutert.

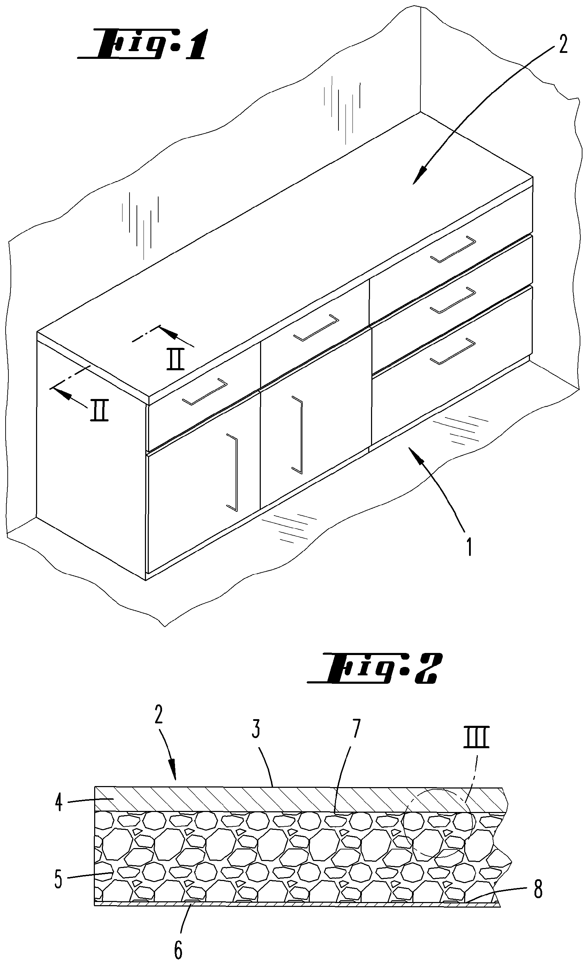

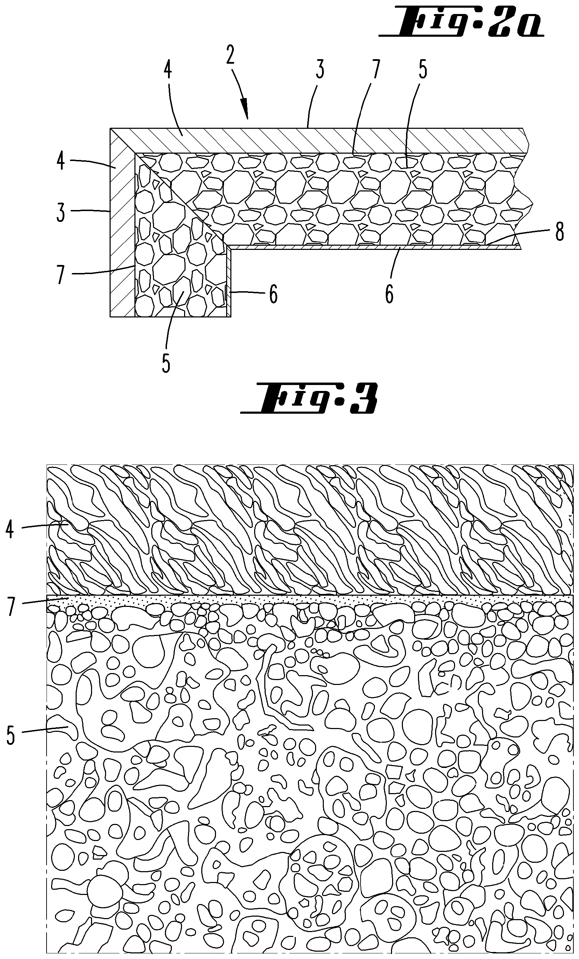

Ein Küchenmöbel 1, vgl. Figur 1, kann eine Arbeitsplatte 2 aufweisen. Es kann sich um ein Küchenmöbel 1 handeln, wie es in einer üblichen Haushaltsküche verwendet ist. Zusätzlich zu einer Wange an der Arbeitsplatte, siehe nachstehende Erläuterung zu Figur 2a, kann auch noch durch einen Plattenkörper, wie er hier beschrieben ist, eine übliche Nischenauskleidung, die nicht im Einzelnen dargestellt ist, vorgesehen sein.

Darüber hinaus kann auch in sonstigen Bereichen, auch nicht auf eine Küche beschränkt, ein Plattenkörper in der hier beschriebenen Art vorgesehen sein.

Bezüglich der Nischenauskleidung kann ein Plattenkörper wie hier beschrieben zur Anwendung kommen, der eine deutlich geringere Dicke, beispielsweise ein Drittel, die Hälfte oder bis hin zu zwei Drittel der Dicke einer üblichen Küchen-Arbeitsplatte aufweist. Die Dicke einer üblichen Küchenarbeitsplatte kann hierbei im Bereich von 38 mm angesetzt werden. Entsprechend kann der Plattenkörper auch eine geringe Dicke von (nur) 13 mm aufweisen.

Für weitere Anwendungen kann es sich auch um einen deutlich dickeren Plattenkörper handeln, beispielsweise bis hin zu einer Dicke von 100 mm. Ein bevorzugter Bereich der möglichen Dicken ist somit zwischen 16 mm und 100 mm gegeben.

Die Arbeitsplatte 2 weist einen mehrlagigen Aufbau auf, wie er in weiterer Einzelheit der Figur 2 zu entnehmen ist. In Figur 2a ist eine typische Weiterverarbeitung des Plattenkörpers, wie er auch grundsätzlich in Figur 2 dargestellt ist, zu einer Arbeitsplatte mit einer Wange, die hier als Gehrungsteil angebracht ist, dargestellt.

Bezüglich des Plattenkörpers bzw. konkret der Arbeitsplatte ist eine im Gebrauch eine äußere Fläche 3 bildende erste Lage 4 vorgesehen. Bei der Arbeitsplatte 2 ist die Lage 4 im Gebrauch auch die obere Lage. Beispielsweise bei einer Tür 16 ist die Lage 4 und die Lage 6 jeweils eine Außenlage, im Nutzungszustand sich vertikal erstreckend. Unter der Lage 4 befindet sich eine weitere, zweite Lage 5 und als - bei dem Ausführungsbeispiel der Arbeitsplatte - unterer Abschluss eine nochmals weitere, dritte Lage 6.

Die obere Lage 4, welche die Arbeitsfläche der Arbeitsplatte darstellt, weist einen steinartigen Charakter auf.

Die Lagen 4, 5 und 6 sind bevorzugt unmittelbar, lediglich durch eine Klebeschicht verbunden, aneinandergrenzend vorgesehen. Die Klebeschicht ist auch bevorzugt lediglich als solche, aus Klebstoff 7 bestehend, ohne eine Strukturlage oder dass sie auf Basis einer vorgefertigten Folienlage gebildet wäre, vorgesehen. Die Nutzung einer vorgefertigten Folienlage im Hinblick auf den Klebstoff 7 ist andererseits grundsätzlich möglich, beispielsweise auch dann, wie weiter noch erläutert, wenn herstellungsmäßig mit einer Erwärmung gearbeitet wird und sich hierbei eine Verflüssigung des Klebstoffes 7 wieder ergeben kann. Die Klebeschicht kann sehr dünn gegeben sein. Es kann auch gegeben sein, dass die Lagen 4 und 5 an vorstehenden Bereichen, insbesondere im Hinblick auf das Granulat, gegebenenfalls die Blähglasteile, siehe weiter unten, unmittelbar aneinander liegen und dazwischen keine oder nur eine sehr dünne Klebstofflage gegeben ist, die dann in der weiteren Fläche wieder verdickt gegeben sein kann. Somit kann die Dicke der Klebstoffschicht zwischen beispielsweise 2 mm und 3 mm und praktisch keiner Dicke, etwa 0,1 mm oder 0,2 mm, über die Fläche unterschiedlich sein.

Die zweite Lage 5 besteht bei dem Ausführungsbeispiel aus einem mineralischen Granulat, das hier als Blähglasgranulat gewählt ist. Das Blähglasgranulat ist vermittels eines Bindemittels, das bevorzugt ein PU-Klebstoff ist, gegebenenfalls aber auch ein Epoxidharz sein kann, zu einem eigenständigen Körper verbunden. Hierbei kann dieser Körper auch erst im Zuge der Herstellung entstehen oder aber im Zuge der Herstellung als eigener Plattenkörper aufgebracht werden, wie dies nachstehend noch in weiterer Einzelheit beschrieben ist. Wie weiter vorne bereits erläutert, kann das Bindemittel aber auch durch einen sich im Volumen beim Aushärten vergrößernden Klebstoff, insbesondere den gleichen bzw. denselben Klebstoff, der auch bevorzugt die Klebeverbindung zwischen der ersten und der zweiten Lage erbringt, gebildet sein.

Hinsichtlich des mineralischen Granulats, also bevorzugt des Blähglasgranulats, ist, wie bereits angemerkt, eine Kugelform der Granulatkörper bevorzugt. Hierbei kann der Durchmesserbereich beispielsweise von 0,1 mm bis 4 mm gegeben sein. Bevorzugt ist, dass entsprechend eine Mehrzahl von Fraktionen gemischt vorliegt. Beispielsweise drei bis sechs Fraktionen, bevorzugt fünf Fraktionen, wobei in jeder Fraktion eine deutlich unterschiedliche Mittelgröße des Durchmessers der Granulatteile gegeben ist. Beispielsweise die erste Fraktion im Bereich von 0,1 mm, die zweite bei 1 mm, die dritte bei 2 mm, die vierte bei 3 mm und die fünfte bei 4 mm. Die geschlossene Gestalt der Granulatkörper, insbesondere kugelförmig geschlossene Gestalt, bei einer Hohlkörperform der Granulatkörper als solcher, ist im Hinblick auf insbesondere das gering angestrebte Gewicht auch von Bedeutung. Bevorzugt werden annähernd oder praktisch 100% geschlossene Granulatteile eingesetzt.

Zwischen der ersten Lage 4 und der zweiten Lage 5 ist bevorzugt ein sich im Zuge der Aushärtung im Volumen vergrößernder Klebstoff 7 als Kleberschicht 8 angeordnet. Der Klebstoff 7 liegt in dem ausgehärteten Zustand, wie er bei einer fertiggestellten Arbeitsplatte 2 gegeben ist, eine dreidimensionale Oberflächenstruktur der zweiten Lage eng umfassend vor. Im Einzelnen ist hierzu auf Figur 3 zu verweisen, in welcher versucht ist, dies zeichnerisch wiederzugeben. Insbesondere ist der Klebstoff ein schäumender Klebstoff.

Die untere, dritte Lage 6 ist bei dem ersten Ausführungsbeispiel eine vergleichsweise dünne Lage, die als Unterzuglage gebildet ist. Die dritte Lage 6 kann durch eine weitere Kleberschicht 8 mit der zweiten Lage 5 verbunden sein. Die Kleberschicht 8 ist bevorzugt auch eine Kleberschicht 8 aus einem im Zuge einer Aushärtung sich im Volumen vergrößernden Klebstoff 7. Insbesondere ist hier auch der schon genannte PU-Klebstoff bevorzugt.

Beim Ausführungsbeispiel besteht die dritte Lage 6 aus einem harzgetränkten Gewebe, das entsprechend nach Aufbringung auf die im Nutzungszustand gegebene Unterseite der zweiten Lage 5 bevorzugt durch Steuerung oder Zugabe von Feuchtigkeit und/oder durch Wärmeentwicklung zur Aushärtung und Verklebung gebracht ist. Die Regulierung der Feuchtigkeit kann einerseits durch den Verarbeitungszustand des Gegenstandes, des Gewebes und/oder der zweiten Lage 5, selbst gesteuert sein, also durch deren Feuchtegehalt. Andererseits, alternativ oder ergänzend, durch eine gezielte Zugabe von Feuchtigkeit, beispielsweise durch Versprühen von Wasser. In gleicher Weise kann allerdings auch entsprechend der zweiten Lage 5 die dritte Lage 6 im Zuge der Herstellung als bereits eigenständig vorgefertigte Platte aufgebracht werden. Insbesondere ist auch bezüglich dieser dritten Lage 6 bevorzugt, dass ein die Steifigkeit der dritten Lage 6 ergebender Binder unterschiedlich ist zu dem Klebstoff 7, mit welchem die Kleberschicht 8 gebildet ist. Alternativ kann aber auch in dieser Variante der Binder aus dem Klebstoff 7 gebildet sein.

Weiter ergänzend oder alternativ zu der dritten Lage 6 in Form einer Unterzuglage, in der beschriebenen Ausführung, kann auch eine dritte oder ggf. fünfte Lage 6 in gleicher Ausbildung wie die erste Lage 4 vorgesehen sein. Entsprechend besteht die dritte bzw. fünfte Lage 6 in diesem Fall, vgl. auch Figuren 6 bis 7, aus einem eine steinartige Fläche darbietenden Naturstein, einem Keramikwerkstoff oder einem Quarz-Komposit.

Mit Bezug zu Figur 6 ist eine Tür 16 dargestellt, die aus einem Plattenkörper mit einem Aufbau, wie er beispielsweise in den Figuren 7a und 7b wiedergegeben ist, bevorzugt gebildet ist.

Hierzu ist ersichtlich derart vorgegangen, dass die Tür 16 zu einer Längsmittelebene E-E im Aufbau symmetrisch gebildet ist. In den Figuren 7a und 7b ist die Längsmittelebene horizontal geschnitten, entsprechend sich als Linie abbildend wiedergegeben. Dieser symmetrische Aufbau kann ggf. mit Ausnahme eines - bezogen auf einen Einbauzustand der Tür - scharnierseitigen oder gegenüberliegenden Längs-Randbereiches 17 und/ oder einer oberen und/oder unteren Stirnseitenkante 18,19 der Tür 16 gegeben sein. Die ggf. wie beschrieben besondere Ausbildung des bzw. der Längs-Randbereiche 17 und/oder der oberen und/oder unteren Stirnseitenkante 18,19 wird bevorzugt nach einer Herstellung des Plattenkörper-Halbzeuges, wie etwa in Bezug auf die Figuren 4 und 5 beschrieben, an einem hieraus gebildeten Tür-Teil vorgenommen. Eine bezogen auf den Einbauzustand horizontal gemessene Tiefe t des Längs-Randbereiches 17 kann in Bezug auf eine Gesamthöhe H der Tür 16 einen Bruchteil betragen, beispielsweise ein Zehntel oder weniger der Gesamthöhe. Absolut gesehen kann es sich um eine Tiefe t von wenigen Zentimetern beispielsweise 2 cm bis 10 cm, handeln.

Was im Einzelnen nicht dargestellt ist, aber auch möglich ist, ist, dass eine entsprechende Ausbildung gemäß Figur 7a bzw. bevorzugt in diesem Fall gemäß Figur 7b, an einer oder beiden oberen Stirnseitenkanten 18, 19 ebenfalls vorgesehen ist.

Bezüglich eines Längs-Randbereiches 17 der Tür 16 ist bevorzugt in die zweite Lage 5 ein Massivkörperteil 22 eingelassen, welches bevorzugt ganz oder zumindest teilweise Längsflächen 20 oder 21 bildet. Bei dem Massivkörperteil 22 kann es sich um ein Holzteil oder beispielsweise auch ein Massiv-Kunststoffteil handeln. Der Massivkörperteil kann, etwa als Aluminiumteil, grundsätzlich auch mit einer inneren Öffnung, also als gekammertes Teil, ausgebildet sein.

Weiter ersichtlich ist bevorzugt, dass der Massivkörperteil 22 in dem wiedergegebenen Querschnitt eine sich zum Inneren der Tür 16 hin verjüngende Form, die bevorzugt keilartig ist, aufweist. Bei einer konkreten Keilform ergeben sich entsprechend zu der Ebene E-E hin geneigte gegenüberliegende Keilflächen 23, 24.

Der Massivkörperteil 22 kann in gleicher Weise wie zu der Verklebung im Übrigen weiter oben ausgeführt, mit einem Klebstoff, also bevorzugt einem PU-Klebstoff, mit der zweiten Lage 5 verklebt sein.

Es kann vorgesehen sein, dass, bevorzugt in dem Anlagebereich zwischen der zweiten Lage 5 und der ersten Lage 4, eine Verstärkungslage 25 eingelegt ist, die sich darüber hinaus bevorzugt auch nur über einen der Erstreckung des Massivkörperteils 22 in Tiefenrichtung entsprechenden Höhenanteils der Tür 16 erstreckt. Diese Unterzuglage kann der Verstärkung dienen im Hinblick auf die in diesem Bereich gegebene Schwächung der zweiten Lage 5 durch das eingesetzte Massivkörperteil 22.

Die Verstärkungslage, die auch als vierte Lage anzusprechen ist, kann ggf. auch als vollständig durchlaufende Verstärkungslage 25 ausgebildet sein. Hierbei ist eine bevorzugte Ausgestaltung entsprechend der weiter vorne beschriebenen vierten Lage gegeben, also beispielsweise auch in Form eines Gitterwerkstoffes, wie etwa eines grobmaschigen Gewebes, beispielsweise eines grobmaschigen Glasfasergewebes, welches es trotz vorhandener vierter Lage ermöglicht, die erste Lage 4 mit der zweiten Lage 5 unmittelbar über den genannten Klebstoff zu verbinden. Weiter alternativ kann die vierte Lage auch als geschlossene Lage ausgebildet sein, mit der unmittelbaren Verbindung über den sich im Volumen vergrößernden Klebstoff dann zwischen der vierten Lage und der zweiten Lage 5.

Herstellungsmäßig wird bevorzugt derart vorgegangen, dass zunächst die erste Lage 4 hergestellt wird.

Im Falle, dass die erste Lage 4 aus einem Naturstein besteht, liegt ein insoweit üblicherweise gesägter Naturstein vor. Die Dicke des Natursteins ist bevorzugt gering gewählt, vorzugsweise im Bereich von 1 mm bis 12 mm, weiter vorzugsweise im Bereich von 3 mm bis 10 mm.

Mit Bezug zu den Figuren 4a bis 4h ist ein erstes mögliches Herstellungsverfahren eines Plattenkörpers, wie er hier betroffen ist, schematisch dargestellt.

Zunächst wird eine rechteckige, oben offene, Form 9 bereitgestellt, deren rechteckige Innenmaße an das bevorzugte Maß des herzustellenden Plattenkörpers angepasst sind. Beispielsweise kann es sich um eine Länge l von ca. 3 m und eine Breite b von ca. 1,5 m handeln.

In die Form 9, siehe Figur 4b, wird dann, bevorzugt mit der späteren Außenseite nach unten, die erste Lage 4, also beispielsweise eine Natursteinplatte, eingelegt. Auf diese Lage 4, deren Rückseite im Ausführungsbeispiel, wird in bevorzugt flüssiger Form, siehe Figur 4c, der beim Aushärten im Volumen vergrößernde Klebstoff 7 aufgebracht. Es handelt sich bevorzugt um eine geschlossene und weiter bevorzugt im Wesentlichen flüssige Klebstofflage aus Klebstoff 7.

Auf diese Klebstofflage wird sodann, siehe Figur 4d, ein Gemisch aus mineralischem Granulat 10, beim Ausführungsbeispiel also ein Blähglasgranulat, als Schüttung aufgebracht. Eine Dicke d kann etwas größer vorgenommen werden als es der letztlichen Dicke der hierdurch später entstehenden zweiten Lage 5 entspricht. Dies zufolge der nachstehend noch erläuterten möglichen Zustellbewegung bei einer Druckbeaufschlagung, die gegebenenfalls zusätzlich zu einer lediglichen Bewegungshinderung vorgesehen sein kann.

Die Schüttung aus Granulat wird weiter mit einem Bindemittel 11 versehen, das hier lediglich zur Erläuterung als aufgegossen dargestellt ist. Das Bindemittel 11 kann auch zuvor schon mit dem Granulat 10 vermischt worden sein.

Auf die so gebildeten lagenartige Schüttung aus Granulat 10 wird sodann, siehe Figur 4e und Figur 4g, die dritte Lage 6 aufgebracht, die zuvor auf ihrer im Einbauzustand der lagenartigen Schüttung zugewandten Flachseite mit einer Lage Klebstoff 7 versehen wurde, auch in diesem Fall bevorzugt als geschlossene, weiter bevorzugt im Wesentlichen flüssige Klebstofflage.

Auf diese -. weitere - Klebstofflage aus Klebstoff 7 wird sodann, siehe Figur 4f, die dritte Lage 6, in Form beim Ausführungsbeispiel eines Glasfasergewebes, aufgebracht. Dieses Glasfasergewebe bzw. die dritte Lage 6 als solche kann hierbei schon eigenständig mit einem weiteren Binder versetzt sein, aber noch beispielsweise rollbar vorliegen. Im Zuge der weiteren Herstellung härtet dann auch dieser Klebstoff (Binder) aus. Die dritte Lage 6 kann auch bereits als starrer Gewebe-Plattenkörper vorliegen und als solcher lediglich in die Form eingelegt werden, wie beschrieben bevorzugt mit bereits auf diese dritte Lage 6 aufgebrachter Klebstofflage. Gegebenenfalls kann die Lage 6 aber auch auf eine zuvor in der Form auf die Granulatschüttung aufgebrachte Klebstofflage stattdessen aufgelegt werden.

Alternativ, siehe Figur 4g, kann als dritte Lage 6 wiederum eine beispielsweise Natursteinplatte, oder auch eine Keramikplatte oder eine Platte aus einem Quarz-Komposit oder einem sonstigen steinartigen Werkstoff, aufgebracht werden.

Die so gefüllte Form wird sodann, Figur 4h, mittels einer Druckplatte 12, die an die offene Innenabmessung der Form 9 angepasst ist und beispielsweise mit einem Druckstempel 13 beaufschlagbar ist, unter Druck gesetzt. Dieses unter Druck setzen kann einerseits allein aus einer Bewegungshinderung bestehen, da der Druck sich dann zufolge des sich im Volumen beim Aushärten vergrößernden Klebstoffs 7 einstellt. Zusätzlich kann mittels des Druckstempels und einem gewissen Verfahren einer Zustellbewegung des Druckstempels, aber auch noch eine ergänzende Druckkraft aufgebracht werden.

Bevorzugt ist das Verfahren des Druckstempels im Sinne einer Zustellbewegung. Hierbei wird das Verfahren soweit bzw. in solchem Ausmaß vorgenommen, woraus sich entsprechend auch die erforderliche Druckbeaufschlagung ergibt, dass das Ausgangsvolumen beziehungsweise eine Ausgangsdicke des so bis dahin gebildeten Plattenkörpers deutlich vermindert wird. Bevorzugt im Bereich von 20% oder mehr, beispielsweise 30% bis 50 %. Dies bedeutet, dass die sich dann ergebende Dicke der Platte nur noch 70% bis 50% der Ausgangsdicke beträgt, bevorzugt im Bereich von 60%.

Bei einer alternativen Herstellungsweise, wie sie in den Figuren 5a bis 5c dargestellt ist, wird anstelle der Aufbringung der Granulatschicht gemäß Figur 4d, siehe Figur 5a, ein vorgefertigter Granulat-Plattenkörper 14 verwendet. Der Granulat-Plattenkörper 14 kann zuvor selbst in einer entsprechenden Form, dann nur betreffend die Herstellung des Granulat-Plattenkörpers selbst, beispielsweise entsprechend wie vorstehend unter Bezug auf Figur 4d erläutert, hergestellt sein. Der vorgefertigte Granulat-Plattenkörper 14 wird auch gemäß dieser Herstellungsweise auf die erste Lage 4 aufgebracht. Auch hierbei ist die Lage 4 zuvor mit einer Lage Klebstoff 7 versehen worden. Bezüglich des Aufbringens der Lage Klebstoff 7 kann grundsätzlich auf die zunächst beschriebene Herstellungsweise verwiesen werden. Auch bei der alternativen Herstellungsweise ist bevorzugt, beispielsweise auch durch Verfahren eines Druckstempels, bei der zuvor gegebenen Herstellung des vorgefertigten Granulat-Plattenkörpers 14 eine Dickenreduzierung, in dem Ausmaß, wie zu der ersten Herstellungsweise auch beschrieben, vorgenommen worden. Es wird auch gemäß dieser Herstellungsweise ein entsprechender Druck aufgebracht, um die eng umfassende, auch als klammerartig zu bezeichnende, Verklebung zwischen der ersten Lage 4 und dem vorgefertigten Granulat-Plattenkörper 14 zu erreichen. Bevorzugt, wie auch schon weiter vorne beschrieben, unter Nutzung des sich bei Aushärtung vergrößernden Volumens.

Nach dem Verfahrensschritt 5a kann entsprechend dem Verfahrensschritt 4f die dritte Lage 6, die in beispielsweise rollbarer Form vorliegt, aufgebracht werden.

Gemäß Figur 5b wird alternativ zu dem Herstellungsschritt gemäß Figur 4f bevorzugt ein fertiger Gewebe-Plattenkörper 15 verwendet. Dieser Gewebe-Plattenkörper 15 ist aufgrund des in ihm schon enthaltenen Binders plattenartig gehärtet und somit als solcher handhabbar. Bei dieser Herstellungsweise ist alternativ auch die Herstellung der dritten Lage durch Verwendung eines beispielsweise noch rollbaren Gewebes möglich.

Weiter alternativ zu dem Verfahrensschritt 4f kann entsprechend dem Verfahrensschritt gemäß Figur 4g ein gleicher Plattenkörper wie er für die erste Lage 4 gegeben ist, zur Ausbildung einer dritten Lage 6, bevorzugt auch unter Verwendung einer entsprechenden weiteren Lage Klebstoff, aufgelegt werden.

Im Übrigen wird in gleicher Weise verfahren wie hinsichtlich der Figuren 4a bis 4h erläutert.

Der Herstellungsschritt gemäß Figur 4h kann zusätzlich zu dem sich entwickelnden oder ausgeübten höheren Druck insbesondere auch bei erhöhter Temperatur vollzogen werden. Hierdurch kann insbesondere eine Beschleunigung der Aushärtung erreicht werden, so dass günstig bereichsweise kurze Taktzeiten in der Herstellung erreicht werden können. Die erhöhte Temperatur kann beispielsweise im Bereich von 40°C bis 170°C oder höher, bevorzugt im Bereich von 100°C bis 150°C, gegeben sein.

In den Figuren 4b bis 4g ist die Form lediglich zur besseren Erkennbarkeit der Lagen vorne aufgeschnitten dargestellt. Es handelt sich bei der tatsächlich benutzten Vorgehensweise bevorzugt immer um eine geschlossene Form wie sie beispielsweise in Figur 4a oder Figur 4h wiedergegeben ist.

Insbesondere dann, wenn ein Klebstoff verwendet wird, bei dem es nicht auf eine sich im Volumen vergrößernde Eigenschaft ankommt, aber auch bei Verwendung eines Klebstoffs mit sich im Volumen vergrößernde Eigenschaft, kann auch, wie dargestellt, bei vorgefertigten Plattenteilen im Übrigen, auf das Einlegen in eine Form vollständig oder weitestgehend verzichtet werden.

Durch die zufolge des Drucks gegebene behinderte Ausweichbarkeit der Lagen 4 und 5 oder gegebenenfalls die beschriebene Volumenreduzierung wird erreicht, dass der Klebstoff die dreidimensionale Oberflächenstruktur zumindest der zweiten Lage eng umfassend sich ausbreitet und so zusätzlich zu einer Verklebung auch eine gleichsam Verklammerung erreichen lässt.

Zur Fertigstellung der Arbeitsplatte wird der Plattenkörper bezüglich der beispielsweise Natursteinlage außenseitig noch gefräst und poliert. Weiter kann eine Kantenverleimung oder sonstige Kantenbearbeitung und darüber hinaus ein Zuschneiden vorgenommen werden.

### Liste der Bezugszeichen

| | | | |
|---|---|---|---|
| 1 | Küchenmöbel | b | Breite |
| 2 | Arbeitsplatte | d | Dicke |
| 3 | Außenfläche | l | Länge |
| 4 | Lage, erste | t | Tiefenabschnitt |
| 5 | Lage, zweite | | |
| 6 | Lage, dritte | | |
| 7 | Klebstoff | | |

(fortgesetzt)

| 8 | Kleberschicht | H | Höhe |
|---|---|---|---|
| 9 | Form | | |
| 10 | Granulat | | |
| 11 | Bindemittel | | |
| 12 | Druckplatte | | |
| 13 | Druckstempel | | |
| 14 | Granulat-Plattenkörper | | |
| 15 | Gewebe-Plattenkörper | | |
| 16 | Tür | | |
| 17 | Längs-Randbereich | | |
| 18 | Stirnseitenkante | | |
| 19 | Stirnseitenkante | | |
| 20 | Längsfläche | | |
| 21 | Längsfläche | | |
| 22 | Massivkörperteil | | |
| 23 | Keilfläche | | |
| 24 | Keilfläche | | |
| 25 | Verstärkungslage | | |

**Patentansprüche**

1. Plattenkörper mit einem mehrlagigen Aufbau, wobei eine erste, im Gebrauch eine Außenfläche bildende Lage (4) aus einem eine steinartige äußere Fläche darbietenden Keramikwerkstoff, Naturstein, einem Quarz-Composite oder einem sonstigen steinartigen Werkstoff besteht, eine zweite Lage (5), die unter der ersten Lage (4) angeordnet ist, aus einem mittels eines Bindemittels zu einem Körper verbundenen mineralischen Granulat besteht und einer dritten Lage (6), die unterhalb der zweiten Lage (5) angeordnet ist, wobei die erste Lage (4) mittels eines bevorzugt im Zuge einer Aushärtung sich im Volumen vergrößernden Klebstoffs (7) mit der zweiten Lage verbunden ist, wobei der Klebstoff (7) eine dreidimensionale Oberflächenstruktur der zweiten Lage (5) eng umfassend vorliegt und unterschiedlich zu dem Bindemittel der zweiten Lage (5) ist oder auch das Bindemittel der zweiten Lage (5) bildet, **dadurch gekennzeichnet, dass** das Granulat zu 50% oder mehr in geschlossener Kugelform vorliegt, mit einer Mehrzahl von gemischt vorliegenden Durchmesserfraktionen.

2. Plattenkörper nach Anspruch 1, **dadurch gekennzeichnet, dass** die dritte Lage (6), die ebenfalls mit der zweiten Lage (5) verklebt ist, als in einem mit den weiteren Lagen unverbundenen Zustand für sich eigenständig handhabbare dünnere Unterzugslage ausgebildet ist.

3. Plattenkörper nach Anspruch 1, **dadurch gekennzeichnet, dass** die dritte Lage (6) wie die erste Lage (4) aus einem eine steinartige äußere Fläche darbietenden Naturstein, einem Keramikwerkstoff, einem Quarz-Komposit oder einem sonstigen steinartigen Werkstoff besteht.

4. Plattenkörper nach einem der vorhergehenden Ansprüche, **dadurch gekennzeichnet, dass** die zweite Lage (5) aus Blähglasteilen gebildet ist.

5. Plattenkörper nach einem der vorhergehenden Ansprüche, **dadurch gekennzeichnet dass** das Bindemittel ein PU-Klebstoff ist.

6. Plattenkörper nach einem der Ansprüche 1 bis 4, **dadurch gekennzeichnet, dass** das Bindemittel ein Harz ist, bevorzugt ein Epoxidharz.

7. Plattenkörper nach einem der vorhergehenden Ansprüche, **dadurch gekennzeichnet, dass** die dritte Lage (6) eine Gewebelage ist, wobei, bevorzugt, die dritte Lage (6) ein Glasfasergewebe und/oder Karbonfasergewebe oder dergleichen aufweist.

8. Plattenkörper nach einem der vorhergehenden Ansprüche, **dadurch gekennzeichnet, dass** der Plattenkörper bei entsprechender Endbearbeitung als Arbeitsplatte eines Küchenmöbels (1) verwendet ist.

9. Plattenkörper nach einem der vorhergehenden Ansprüche, **dadurch gekennzeichnet, dass** die erste Lage (4) und/ oder die dritte Lage (6) unmittelbar mit der zweiten Lage (5) verbunden ist.

10. Plattenkörper nach einem der vorhergehenden Ansprüche, **dadurch gekennzeichnet, dass** die erste Lage (4) vermittels einer vierten Lage, einer Zwischenlage, mit der zweiten Lage (5) verbunden ist, wobei die Zwischenlage mittels eines bevorzugt im Zuge einer Aushärtung sich im Volumen vergrößernden Klebstoffs (7) mit der zweiten Lage (5) verbunden ist, wobei der Klebstoff (7) eine dreidimensionale Oberflächenstruktur der zweiten Lage (5) engumfassend vorliegt und das Bindemittel der zweiten Lage (5) bildet oder auch unterschiedlich ist zu dem Bindemittel der zweiten Lage (5).

11. Plattenkörper nach einem der vorhergehenden Ansprüche, **dadurch gekennzeichnet, dass** der Plattenkörper als Tür (16) ausgebildet ist, wobei, bevorzugt, eine Stirnfläche der Tür (16) durch ein eingesetztes Massivkörperteil (22), insbesondere ein Holzteil, gebildet ist und/oder das Massivkörperteil (22) nur im Bereich der zweiten Lage (5) eingesetzt ist.

12. Plattenkörper nach Anspruch 12, **dadurch gekennzeichnet, dass** das Massivkörperteil (22) sich zum Türinneren hin verjüngend, bevorzugt keilartig verjüngend, in diesem Fall mit einer oder zwei gegenüberliegenden zum Inneren des Plattenkörpers und in Flächenrichtung des Plattenkörpers aufeinander zulaufenden Keilflächen (23, 24), ausgebildet ist.

13. Verfahren zur Herstellung eines Plattenkörpers mit einem mehrlagigen Aufbau, wobei eine erste, im Gebrauch eine Außenfläche bildende Lage (4) aus einem eine steinartige äußere Fläche darbietenden Naturstein, einem Keramikwerkstoff, einem Quarz-Composite oder einem sonstigen steinartigen Werkstoff besteht, eine zweite Lage (5), die unter der ersten Lage (4) angeordnet ist, aus einem mittels eines Bindemittels zu einem Körper verbundenen mineralischen Granulat besteht und einer dritten Lage (6), die unterhalb der zweiten Lage (5) angeordnet ist, vorgesehen ist, wobei weiter die Granulatlage mit der ersten Lage (4) unter Druckeinwirkung verbunden wird ,**dadurch gekennzeichnet, dass** auf eine Rückseite der ersten Lage (4) ein bevorzugt im Zuge einer Aushärtung sich im Volumen vergrößernder Klebstoff (7) aufgebracht wird, dass sodann die Granulatlage aufgebracht wird, die ein Bindemittel aufweist, das auch durch den Klebstoff gegeben sein kann oder unterschiedlich ist zu dem Klebstoff (7), wobei die Granulatlage bei einer Verarbeitung schon als für sich handhabbare Platte, mit einer Bindemittelmatrix, vorliegt oder im Zuge einer Schichtbildung, durch Aufstreuen oder Aufgießen von mit Bindemittel durchsetzten Granulatkörpern gebildet wird und Granulat aufweist, das zu 50% oder mehr in geschlossener Kugelform vorliegt, wobei weiter das Granulat in einer Mehrzahl von gemischten Durchmesserfraktionen vorliegt.

14. Verfahren nach Anspruch 13, **dadurch gekennzeichnet, dass** vor der Druckaufbringung auf die zweite Lage (5) eine dritte Lage (6) aufgebracht wird und/oder dass die dritte Lage (6) mit der zweiten Lage (5) verklebt wird.

15. Verfahren nach Anspruch 13 oder 14, **dadurch gekennzeichnet, dass** die dritte Lage (6) mit der zweiten Lage (5) mittels eines sich beim Aushärten im Volumen vergrößernden Klebstoffs (7) verklebt wird.

## Claims

1. Panel body with a multi-layer structure, wherein a first layer (4) forming an outer surface in use consists of a ceramic material, natural stone, a quartz composite or another stone-like material presenting a stone-like outer surface, a second layer (5) arranged below the first layer (4) consists of a mineral granulate bonded by means of a binder to form a body, and a third layer (6) arranged below the second layer (5), wherein the first layer (4) is bonded to the second layer (5) by means of an adhesive (7) which preferably increases in volume in the course of curing, wherein the adhesive (7) is present closely enclosing a three-dimensional surface structure of the second layer (5) and is different from the binder of the second layer (5) or also forms the binder of the second layer (5), **characterized in that** the granulate is present to 50% or more in closed spherical form, with a plurality of mixed diameter fractions present.

2. Panel body according to claim 1, **characterized in that** the third layer (6), which is also bonded to the second layer (5), is designed as a thinner underlay layer which can be handled independently in a state unbonded to the further layers.

3. Panel body according to claim 1, **characterized in that** the third layer (6), like the first layer (4), consists of a natural stone presenting a stone-like outer surface, a ceramic material, a quartz composite or another stone-like material.

4. Plate body according to one of the preceding claims, **characterized in that** the second layer (5) is formed from expanded glass parts.

5. Panel body according to one of the preceding claims, **characterized in that** the binder is a PU adhesive.

6. Panel body according to any one of claims 1 to 4, **characterized in that** the binder is a resin, preferably an epoxy resin.

7. Panel body according to one of the preceding claims, **characterized in that** the third layer (6) is a fabric layer, wherein, preferably, the third layer (6) comprises a glass fibre fabric and/or carbon fibre fabric or the like.

8. Panel body according to one of the preceding claims, **characterized in that** the panel body is used as a worktop of a kitchen piece of furniture (1) with appropriate finishing.

9. Panel body according to one of the preceding claims, **characterized in that** the first layer (4) and/or the third layer (6) is directly connected to the second layer (5).

10. Panel body according to one of the preceding claims, **characterized in that** the first layer (4) is connected to the second layer (5) by means of a fourth layer, an intermediate layer, the intermediate layer being connected to the second layer (5) by means of an adhesive (7) which preferably increases in volume in the course of curing, the adhesive (7) being present closely surrounding a three-dimensional surface structure of the second layer (5) and forming the binder of the second layer (5) or also being different from the binder of the second layer (5).

11. Panel body according to one of the preceding claims, **characterized in that** the panel body is formed as a door (16), wherein, preferably, an end face of the door (16) is formed by an inserted solid body part (22), in particular a wooden part, and/or the solid body part (22) is inserted only in the region of the second layer (5).

12. A panel body according to claim 12, **characterized in that** the solid body part (22) is designed to taper towards the interior of the door, preferably in a wedge-like manner, in this case with one or two opposing wedge surfaces (23, 24) converging towards the interior of the panel body and in the surface direction of the panel body.

13. A method of manufacturing a panel body with a multi-layer structure, wherein a first layer (4) forming an outer surface in use consists of a natural stone presenting a stone-like outer surface, a ceramic material, a quartz composite or another stone-like material, a second layer (5), which is arranged below the first layer (4), consists of a mineral granulate bonded by means of a binder to form a body, and a third layer (6), which is arranged below the second layer (5), is provided, the granulate layer further being bonded to the first layer (4) under the action of pressure, **characterized in that** an adhesive (7), which preferably increases in volume in the course of curing, is applied to a rear side of the first layer (4), **in that** the granulate layer is then applied, which has a binder which can also be provided by the adhesive or is different from the adhesive (7), the granulate layer, when processed, already being provided as a plate which can be handled by itself, with a binder matrix, or is formed in the course of layer formation, by scattering or pouring on granulate bodies interspersed with binder, and has granulate which is 50% or more in closed spherical form, the granulate further being present in a plurality of mixed diameter fractions.

14. Method according to claim 13, **characterized in that** a third layer (6) is applied to the second layer (5) prior to the application of pressure and/or that the third layer (6) is glued to the second layer (5).

15. Method according to claim 13 or 14, **characterized in that** the third layer (6) is bonded to the second layer (5) by means of an adhesive (7) which increases in volume during curing.

**Revendications**

1. Corps de plaque avec une structure à plusieurs couches, dans lequel une première couche (4), formant en utilisation une surface extérieure, est constituée d'un matériau céramique, d'une pierre naturelle, d'un composite de quartz ou d'un autre matériau de type pierre, présentant une surface extérieure de type pierre, une deuxième couche (5), qui est disposée sous la première couche (4), est constituée d'un granulat minéral lié en un corps au moyen d'un agent de liaison, et une troisième couche (6), qui est disposée sous la deuxième couche (5), la première couche (4) étant liée à la deuxième couche au moyen d'un adhésif (7) dont le volume augmente de préférence au cours du durcissement, l'adhésif (7) entourant étroitement une structure de surface tridimensionnelle de la deuxième couche (5) et étant différent du liant de la deuxième couche (5) ou formant également le liant de la deuxième couche (5), **caractérisé en ce que** le granulat est présent à 50 % ou plus sous une forme sphérique fermée, avec une pluralité de fractions de diamètre présentes en mélange.

2. Corps de plaque selon la revendication 1, **caractérisé en ce que** la troisième couche (6), qui est également collée à la deuxième couche (5), est conçue comme une couche de support plus mince pouvant être manipulée de manière autonome dans un état non relié aux autres couches.

3. Corps de plaque selon la revendication 1, **caractérisé en ce que** la troisième couche (6) est constituée, comme la première couche (4), d'une pierre naturelle présentant une surface extérieure de type pierre, d'un matériau céramique, d'un composite de quartz ou d'un autre matériau de type pierre.

4. Corps de plaque selon l'une des revendications précédentes, **caractérisé en ce que** la deuxième couche (5) est formée de parties de verre soufflé.

5. Corps de plaque selon l'une des revendications précédentes, **caractérisé en ce que** le liant est une colle PU.

6. Corps de plaque selon l'une des revendications 1 à 4, **caractérisé en ce que** le liant est une résine, de préférence une résine époxy.

7. Corps de plaque selon l'une quelconque des revendications précédentes, **caractérisé en ce que** s la troisième couche (6) est une couche de tissu, dans lequel, de préférence, la troisième couche (6) comprend un tissu de fibres de verre et/ou un tissu de fibres de carbone ou similaire.

8. Corps de plaque selon l'une des revendications précédentes, **caractérisé en ce que** le corps de plaque, après une finition appropriée, est utilisé comme plan de travail d'un meuble de cuisine (1).

9. Corps de plaque selon l'une des revendications précédentes, **caractérisé en ce que** la première couche (4) et/ou la troisième couche (6) est directement reliée à la deuxième couche (5).

10. Corps de plaque selon l'une des revendications précédentes, **caractérisé en ce que** la première couche (4) est reliée à la deuxième couche (5) au moyen d'une quatrième couche, une couche intermédiaire, la couche intermédiaire étant reliée à la deuxième couche (5) au moyen d'un adhésif (7) dont le volume augmente de préférence au cours d'un durcissement, l'adhésif (7) étant présent de manière à entourer étroitement une structure superficielle tridimensionnelle de la deuxième couche (5) et formant le liant de la deuxième couche (5) ou étant également différent du liant de la deuxième couche (5).

11. Corps de plaque selon l'une des revendications précédentes, **caractérisé en ce que** le corps de plaque est réalisé sous forme de porte (16), une face frontale de la porte (16) étant de préférence formée par une partie de corps massif (22) insérée, en particulier une partie en bois, et/ou la partie de corps massif (22) étant insérée uniquement dans la zone de la deuxième couche (5).

12. Corps de plaque selon la revendication 12, **caractérisé en ce que** la partie de corps massif (22) se rétrécit vers l'intérieur de la porte, de préférence en forme de coin, dans ce cas avec une ou deux surfaces de coin (23, 24) opposées vers l'intérieur du corps de panneau et convergeant l'une vers l'autre dans le sens de la surface du corps de panneau.

13. Procédé de fabrication d'un corps de plaque avec une structure à plusieurs couches, dans lequel une première couche (4), formant en utilisation une surface extérieure, est constituée d'une pierre naturelle, d'un matériau céramique, d'un composite de quartz ou d'un autre matériau de type pierre, présentant une surface extérieure de type pierre, une deuxième couche (5), qui est disposée sous la première couche (4), est constituée d'un granulat minéral lié en un corps au moyen d'un liant, et une troisième couche (6), qui est disposée sous la deuxième couche (5), est prévue, la couche de granulat étant en outre liée à la première couche (4) sous l'effet de la pression, **caractérisé**

**en ce que** la troisième couche (6) est disposée sous la deuxième couche (5), **en ce que** l'on applique sur une face arrière de la première couche (4) une colle (7) dont le volume augmente de préférence au cours d'un durcissement, **en ce que** l'on applique ensuite la couche de granulés qui présente un liant qui peut également être donné par la colle ou qui est différent de la colle (7), la couche de granulés se présentant déjà lors d'un traitement comme une plaque manipulable en soi, avec une matrice de liant, ou est formée au cours d'une formation de couches, par épandage ou versement de corps de granulés imprégnés de liant, et présente des granulés qui se présentent à 50 % ou plus sous forme sphérique fermée, les granulés se présentant en outre en une pluralité de fractions de diamètre mélangées.

14. Procédé selon la revendication 13, **caractérisé en ce qu'**une troisième couche (6) est appliquée sur la deuxième couche (5) avant l'application de la pression et/ou **en ce que** la troisième couche (6) est collée à la deuxième couche (5).

15. Procédé selon la revendication 13 ou 14, **caractérisé en ce que** la troisième couche (6) est collée à la deuxième couche (5) au moyen d'un adhésif (7) dont le volume augmente lors du durcissement.

Fig. 1

Fig. 2

Fig. 2a

Fig. 3

**Fig·4a**

**Fig·4c**

**Fig·4b**

**Fig·4f**

**Fig·4d**

**Fig·4g**

**Fig·4e**

**Fig. 4h**

**Fig. 5a**

**Fig. 5b**

Fig.6

VIIa,b

18

20

VIIa,b

VIIa,b

VIIa,b

17

19

18

H

17

16

19

21

EP 3 774 691 B1

Fig.7a

Fig.7b

**IN DER BESCHREIBUNG AUFGEFÜHRTE DOKUMENTE**

**In der Beschreibung aufgeführte Patentdokumente**

- DE 19519116 A1
- DE 102011108996 B3
- DE 102010034851 B4
- DE 102010003236 U1
- EP 1153738 A1